(19)

Europäisches
Patentamt

European
Patent Office

Office européen
des brevets

(11) **EP 2 564 057 B1**

(12) **EUROPEAN PATENT SPECIFICATION**

(45) Date of publication and mention
of the grant of the patent:
**26.08.2015 Bulletin 2015/35**

(51) Int Cl.:
***F03D 1/06*** (2006.01)

(21) Application number: **11715224.9**

(22) Date of filing: **15.04.2011**

(86) International application number:
**PCT/EP2011/056065**

(87) International publication number:
**WO 2011/134810 (03.11.2011 Gazette 2011/44)**

(54) **ROTOR FOR A WIND TURBINE**

ROTOR FÜR EINE WINDTURBINE

ROTOR POUR ÉOLIENNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.04.2010 DK 201070170**

(43) Date of publication of application:
**06.03.2013 Bulletin 2013/10**

(73) Proprietor: **SE Blades Technology B.V.
7559 ST Hengelo (NL)**

(72) Inventors:
• **BJERTRUP NIELSEN, Thomas
DK-8940 Randers SV (DK)**
• **SLOTH, Erik
DK-8410 Rønde (DK)**
• **GONZALEZ, Alejandro Gomez
DK-8000 Aarhus (DK)**
• **JENSEN, Rasmus
DK-8410 Rønde (DK)**
• **RECK, Mads
DK-8210 Århus (DK)**

(56) References cited:
**EP-A1- 1 019 631         EP-A1- 1 953 383
EP-A2- 1 596 063         WO-A1-2006/090215
DE-A1-102009 025 927**

## Description

The present invention relates to a rotor for a wind turbine, where the wind turbine comprises at least a tower, a nacelle on top of said tower and a rotor, said rotor having a diameter of 50 metres or more, and being connected to a substantially horizontal main shaft, said main shaft being rotatably mounted in said nacelle, said wind turbine being of the type where the rotor is facing up-wind, where said rotor comprises at least one blade, but preferably three blades and a hub, said blades having an elongated shape with a root end and a tip end, where said blades at the root end are connected to said hub and where the interface between said hub and said blades comprises a pitch mechanism, further said rotor has a rotor plane, described by the area swept by the blades, said rotor plane being with a cone shape, i.e. the rotor plane is with an angle towards the up-wind direction, where the cone shape - at least partly - originates from the shape of the hub, and where one blade of said rotor has a combined radius specific solidity $Sol_r$ at:

> blade radius r = 30% of the rotor radius R, where $Sol_r \leq 0{,}036$
> blade radius r = 40% of the rotor radius R, where $Sol_r \leq 0{,}03$
> blade radius r = 50% of the rotor radius R, where $Sol_r \leq 0{,}0245$
> blade radius r = 60% of the rotor radius R, where $Sol_r \leq 0{,}021$
> blade radius r = 70% of the rotor radius R, where $Sol_r \leq 0{,}0175$
> blade radius r = 80% of the rotor radius R, where $Sol_r \leq 0{,}014$
> blade radius r = 90% of the rotor radius R, where $Sol_r \leq 0{,}0115$
> blade radius r = 96% of the rotor radius R, where $Sol_r \leq 0{,}0095$,
> and where $Sol_r$ has a level below a linear interpolation between any of the given blade radii.

Definition of the combined specific solidity $Sol_r$ :

$$Sol_r = \frac{n \cdot chord}{2\pi \cdot R}$$

Where n is the number of blades on the rotor, chord is the length of the chord of the blade at the specific radius and R is the maximum diameter of the rotor.

It is well known in the wind energy industry to have a wind turbine with a foundation, a tower with a nacelle on top and with a rotor fixed to a main shaft. During time several different designs have been developed, but it seems that the type known as the "Danish Type" has become the most used and the most effective. A wind turbine of the "Danish Type" is also known as a front runner, with a substantial horizontal main shaft, and with a rotor having three blades and facing upwind. As the size of wind turbines is becoming larger and larger, with rotor diameters of 80 metres and for the very largest even up to approximately 125 metres, a number of engineering challenges occurs. One of these challenges is to secure a sufficient clearance between the tip of the rotating blades and the tower, under the different working conditions for the wind turbine.

Over time several different ways of creating the needed clearance have been used. The most common ways to obtain sufficient clearance are to manufacture the blades with certain stiffness and to tilt the main shaft a few degrees, typically 4 to 6 degrees, upwards in the end where the rotor are mounted. It is also commonly known to use a rotor where the blades are mounted to a hub is such a way that the plane described by the rotor describes a cone, with an angle of a few degrees relative to a flat rotor plane. This angle is commonly known as the cone angle $\beta$.

Even other attempts has been tried, where the blades on a rotor are made with a pre-bend, as described in EP 1 019 631 B1 or with a cone combined with a pre-bend as described in EP 1 596 063 A2. Also, document WO 2006/090215 A discloses a wind turbine comprising a wind turbine blade with high lift and/or low solidity.

It is the object of the invention to provide a rotor for a wind turbine, where the above mentioned drawbacks with tip to tower clearance are eliminated and where the necessary tip to tower clearance are obtained. Further, it is an object of the invention to provide a rotor structure allowing the blades to have a low combined radius specific solidity, $Sol_r$.

This invention concerns a rotor for a wind turbine according to the introductory part of this description and according to the preamble of claim 1, where a blade of said rotor comprises at least two blade sections in the lengthwise direction of said blade, where at least one blade section has a curvature along the blade and relative to a second blade section, where said curvature results in the tip end of said blade being offset (x) relative to the axis of the blade root in the flap wise direction of the blade and in the up-wind direction, where the ratio (x/L) of the offset (x) relative to a distance (L) from the tip end of the blade to the blade root, said distance (L) being measured perpendicular to the plane of the root end of the blade and said offset (x) being measured as the perpendicular offset from the axis of the blade root, is between 0,022 and 0,087, and that said rotor is with a cone angle $\beta$ between 1 and 6 degrees, said cone angle $\beta$ being measured between the axis of the blade root and perpendicular to the axis of the main shaft.

Having a slender blade profile, and at the same time having a relatively small ratio (x/L) also called "pre-bending" of the blade together with a cone shaped rotor plane, has a number of advantages. First of all the slender blade profiles have the advantage that the load from the wind is minimized as the blade area exposed to the wind is smaller and therefore less stresses and loads are transferred from the blades to the rest of the wind turbine structure.

Secondly, it is advantageous that the blades are pre-bend and thus giving the possibility to be deflected even more by the wind and still maintaining a sufficient clearance between the tip of the blades and the tower. Pre-bending does, however, give some trouble during fabrication and transportation if the ratio (x/L) is too big. Most blades for modern wind turbines are manufactured from fibres of various types in various types of mats which is impregnated with a suitably resin using a method well known as VARTM (vacuum assisted resin transfer moulding). This is a very attractive process as the impregnating and curing takes place in a closed mould and thus no fumes or only a very small amount of fumes will enter the production facilities. If the pre-bend ratio (x/L) is too big, it becomes difficult to draw the resin by vacuum into the mould, as a rather large height difference is present. This can result in difficulties obtaining the preferred and needed quality in the moulded blades. Another problem with pre-bending with a large ratio (x/L) is, as mentioned above, transportation. If the blades have to be transported over land by vehicle the width of the roads and the height of bridges and tunnels become a relevant factor. If a blade for example has a length of 50 metres and a pre-bend ratio of 0,1, this means that the width of the blade will be 0,1 * 50 = 5 meter and then the radius of the root end has to be added, as we are measuring from the centre of the root end, which easily could end with a total width of the blade of more than 6 metres. Transportation of such a blade is already a challenge because of the length, and handling the width makes the challenge even bigger.

To be able to have a sufficient tip to tower clearance and at the same time to have a relatively low pre-bend ratio (x/L), it is also preferable to have the hub of the rotor manufactured with the interface for the blades with an angle. By having this angle the rotor-plane will have the shape of a cone. This cone together with the pre-bended and slender blades will create a sufficient tip to tower clearance and at the same time the blades can be transported by vehicle without extraordinary trouble. Hence there is a synergy occurring between the single measures slenderness, pre-bending and coned arrangement of the blades to the hub. This synergy is getting even more important when it comes to the definition of the very quantity of each measure.

In a preferred embodiment of a rotor for a wind turbine according to the invention, a blade of said rotor can have a combined radius specific solidity $Sol_r$ at:

Blade radius r = 30% of the rotor radius R, where $Sol_r \leq 0,0345$
blade radius r = 40% of the rotor radius R, where $Sol_r \leq 0,028$
blade radius r = 50% of the rotor radius R, where $Sol_r \leq 0,023$
blade radius r = 60% of the rotor radius R, where

$Sol_r \leq 0,019$
blade radius r = 70% of the rotor radius R, where $Sol_r \leq 0,016$
blade radius r = 80% of the rotor radius R, where $Sol_r \leq 0,0125$
blade radius r = 90% of the rotor radius R, where $Sol_r \leq 0,01$
blade radius r = 96% of the rotor radius R, where $Sol_r \leq 0,008$,
and where $Sol_r$ has a level below a linear interpolation between any of the given blade radii.

In yet another preferred embodiment of a rotor for a wind turbine according to the invention, a blade of said rotor can have a combined radius specific solidity $Sol_r$ at:

Blade radius r = 30% of the rotor radius R, where $Sol_r \leq 0,033$
blade radius r = 40% of the rotor radius R, where $Sol_r \leq 0,0255$
blade radius r = 50% of the rotor radius R, where $Sol_r \leq 0,021$
blade radius r = 60% of the rotor radius R, where $Sol_r \leq 0,017$
blade radius r = 70% of the rotor radius R, where $Sol_r \leq 0,0135$
blade radius r = 80% of the rotor radius R, where $Sol_r \leq 0,011$
blade radius r = 90% of the rotor radius R, where $Sol_r \leq 0,008$
blade radius r = 96% of the rotor radius R, where $Sol_r \leq 0,0065$,
and where $Sol_r$ has a level below a linear interpolation between any of the given blade radii.

By having the blades with a combined radius specific solidity $Sol_r$ as described above a very attractive solution is obtained as the wind turbine structure only is affected with a minimum of loads. Further, the blades themselves are not exposed to the same heavy loads and resulting deflection as blades with a higher combined radius specific solidity. Thus it is a possibility to manufacture the blades with less rigidity as there is no need for it, which will affect the choice of the different materials used for producing the blades. For instance using expensive carbon or aramid fibres can be minimized or even avoided. Blades made with some - small or large - content of carbon and/or aramid fibres will be more expensive and there are a whole lot of production measures that have to be considered when combining two or more different types of fibres, e.g. considerations regarding different stiffness, thermal expansion and electrical conductivity. By not having the need for the large stiffness the blades can be made of a uniform type of fibres, e.g. glass fibres and with a suitably resin such as a polyester or epoxy resin. A further advantage of the slender blade is that it becomes possible to have rotor blades with less thickness and thus it becomes possible to use high performance airfoils which are more efficient.

In a rotor for a wind turbine according to the invention the ratio (x/L) of the offset (x) relative to a distance (L) is between 0,022 and 0,087, or preferably between 0,033 and 0,054, as the pre-bend ratio (x/L) then will have a size making transportation of long blades of up to 50 metres or more possible by vehicle and at the same time securing the necessary tip to tower clearance.

A rotor for a wind turbine according to the invention has a rotor with a cone angle β between 1 and 6 degrees or preferably between 2 and 5 degrees, said cone angle β being measured between the axis of the blade root and perpendicular to the axis of the main shaft. A cone angle β as described will together with the previous mentioned construction details fulfil the wish of a wind turbine with slender and pre-bended blades installed on a hub where the interface is with an angle. By having this combination the synergetic effect is archived to make use of blades with less stiffness and weight and thus the blades will become cheaper to manufacture and to transport and thus the overall environmental load will be decreased. The reduced weight together with the slender profile will also have a positive effect on the complete structure, as the aerodynamic will decrease and thereby allowing for further optimization of structural strength of the different parts of the construction.

In yet another preferred embodiment of a rotor for a wind turbine according to the invention the main shaft is tilted with an angle between -2 and +4 degrees, or between -2 and +2 degrees, or even between 0 and +2 degrees, said angle being measured at the hub and between horizontal and the centre line of said main shaft. By having only a slight positive angle or even a negative tilt angle on the main shaft, a significant reduction of emitted noise is obtained. When a traditional wind turbine is running with a main shaft with an inclination of approximately +4 to +6 degrees noise is emitted. The noise is especially emitted from the blade moving downwards. This is caused by the interaction between the blade and the wind and is increased due to the fact that the downward moving blade is forced against the wind as a direct consequence of the angle of the main shaft, also called the tilt angle α. Thus a significant tilt angle α of +4 to +6 degrees leads to the blades experiencing a higher wind velocity on the downward movement than on the upward movement and thus more noise is emitted. During last years problems with noise have been dealt with by erecting the wind turbines in distant areas and offshore, where no people are bothered by the noise. By having the tilt angle α in the intervals as described above this noise is reduced and especially by large rotor diameters of up to 80 metres or more, this is very attractive, as it makes it possible to erect large wind turbines onshore with only a minimum of environmental impact.

Noise emission from wind turbines has a modulating character i.e. the emitted noise level is varied over time. At close distances a major part of this variation originates from the difference in distance from the observer position to the blade. At longer distances, this variation in observer distance vanishes, but modulation of the noise level is still seen from longer distances. The cause of this is primarily that the blades emit varying noise as a function of the position in the rotation. When the main shaft has a tilt angle α and the wind shear is vertical or close to vertical, the blades will experience variances in the inflow speed of the wind. This will cause variations in the aerodynamic angle of attack. These variations will result in the described variation in noise emission and will be minimized by having only a small tilt angle α e.g. between 0 and +2 degrees to horizontal.

The invention further comprises an embodiment where a blade for a rotor according to the invention is assembled from two or more blade sections, and where the two or more sections comprises co acting means for assembling said blade sections into one functionally complete blade for a rotor. By having a dividable blade several advantages regarding manufacturing and transportation are achieved. As the blades tend to be made longer and longer the handling of the blades becomes a larger challenge. The manufacturing and storage facilities have to be very large and especially during transportation from the place of manufacturing to the site where the blades is to be installed on a wind turbine, seems to be quite a challenge. By having the blades build in sections and assembled on site, a very attractive solution is reached seen from the mentioned point of view.

Further there are a number of advantages of the slender blades, i.e. the low radius specific solidity. When comparing blades according to the invention with more traditional blades with a wider chord distribution and thus with a higher $Sol_r$ the advantages of the slenderness is that the annual yield per load ratio is higher resulting in lower wind turbine costs per kWh produced over 20 years. The annual yield increases as the rotor diameter can be increased with the slender blades for the same load level compared to a traditional blade with wider chord distribution. And regarding fatigue loads the same coefficient of lift - Cl as a function of the angle of attack, will reduce the load variations over time due to turbulence with a reduced chord according to the invention. This is with respect to flap wise loads which will give lower loads on the blades, hub and main frame. Further with respect to rotor thrust it will give lower loads on the tower and foundation. Another situation where a rotor for a wind turbine according to the invention is advantageous is when designing for extreme loads during idling or stand still of the rotor at high wind speeds (for instance the 50 year gust). As the blade area is lower also the extreme loads are lower.

By having a rotor with only a small tilt angle α noise will be reduced as mentioned above and a small cone angle β will result in a rotor with a centre of gravity closer to the main bearing thus leading to less loads in said main bearing, but also in the main shaft and in the main frame of the nacelle. Further the relatively small ratio of the pre-bend will reduce problems during manufacturing, transportation and handling in general. At the same time there is the large advantage that the centre of gravity of the rotor is closer to the main bearing as already mentioned with regards to the cone angle β.

A further advantage of having a small tilt is the reduction in unsteady loads. Unsteady loads may be of a purely mechanical character (for example the own weight of the blades), as well as of an aerodynamic nature (interaction with the wind). A low rotor tilt has an influence on the aerodynamic loads, causing a reduction in the unsteadiness of these. For a rotor with high tilt angles, the angle between the incident wind and the blades oscillates in time, causing fatigue loads which are detrimental for the structure. Not only the fatigue loads are lower, but also the aerodynamic performance of the whole rotor is higher due to a more optimal incidence on the blade elements.

In the following the invention will be described with reference to the drawing, where

Fig. 1 shows a part of a wind turbine with normal blades.

Fig. 2 shows a part of a wind turbine with slender blades.

Fig. 3 shows a rotor with a hub with a cone angle β and with a pre-bended blade.

Fig. 4 shows a rotor with a hub with a cone angle β and with a pre-bended blade.

Fig. 5 shows a rotor with a hub with a cone angle β and with a pre-bended blade.

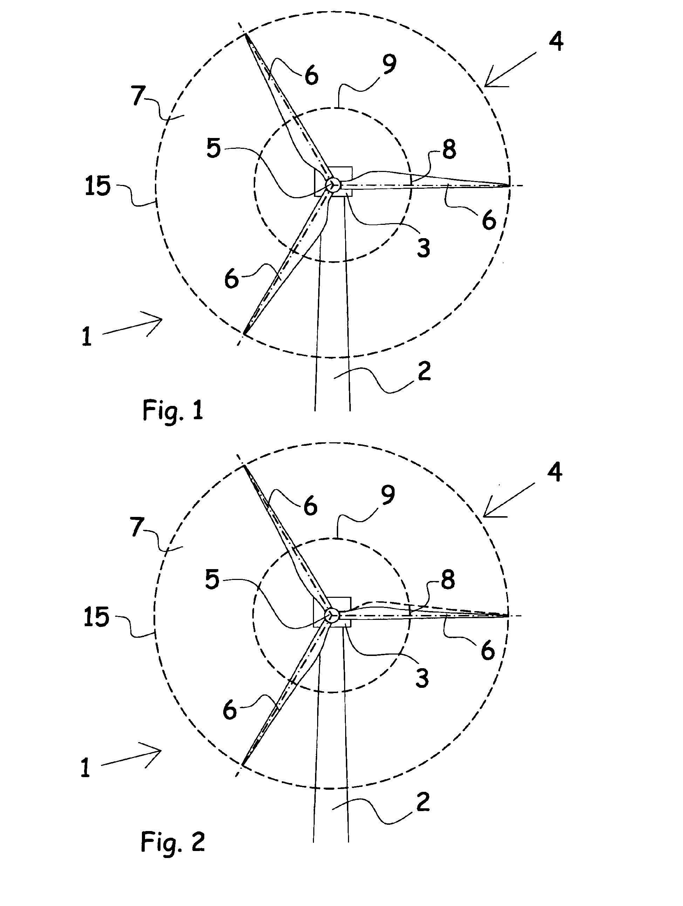

In fig. 1 a part of the top of a wind turbine 1 is seen. The wind turbine 1 consists of a tower 2, a nacelle 3, and a rotor 4, said rotor 4 consisting of a hub 5 and three blades 6. During rotation of the blades 6 an area 7 is swept by the blades 6. The ratio between this area 7 and the area of the three blades 6, which are facing towards the wind, is an expression for the rotors solidity. To be able to use a solidity ratio as a function of the radius a new ratio $Sol_r$ is used. This ratio $Sol_r$ is called the combined radius specific solidity and is the ratio between the added length of the chord 8 on all the blades and the circumference of the circle 15 described by the maximum radius on the rotor 4.

Definition of the combined specific solidity $Sol_r$ :

$$Sol_r = \frac{n \cdot chord}{2\pi \cdot R}$$

Where n is the number of blades on the rotor, chord is the length of the chord of the blade at the specific radius and R is the maximum diameter of the rotor.

In fig. 2 another rotor is seen where the combined radius specific solidity clearly is less than in fig. 1. On top of one of the blades 6 a blade as shown in fig. 1 is depicted with a dashed line, just to illustrate the difference in the ratio $Sol_r$.

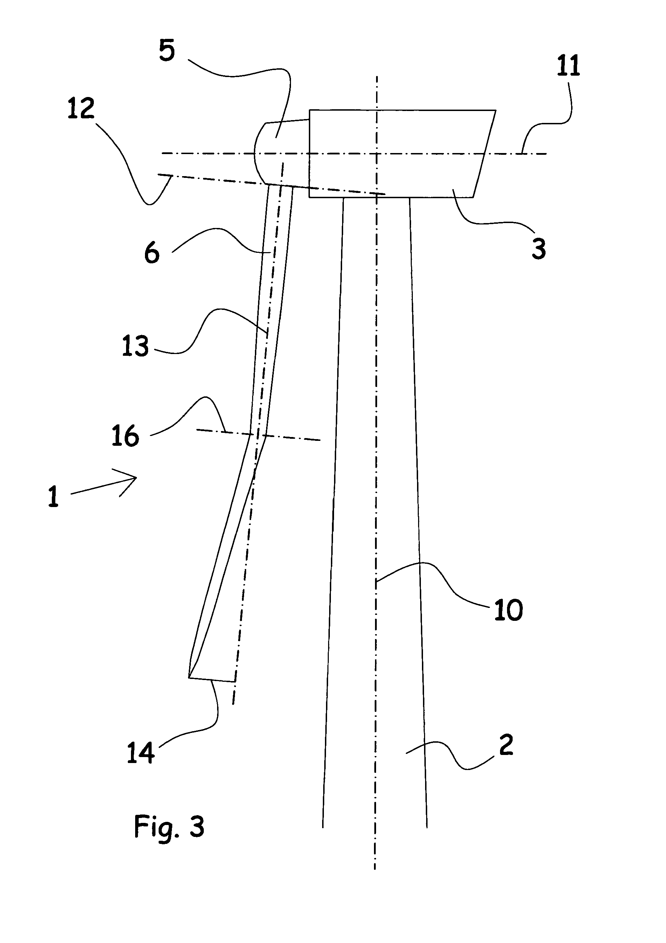

In fig. 3 the top of a wind turbine 1 is shown as seen from the side, where the tower 2 has a centre line 10, the nacelle 3 has a line 11 indicating the direction of the main shaft. Further, a rotor 4 with a hub 5 and with a blade 6 is shown. The hub 5 is with an angled interface for the blades 6. The direction of the interface is indicated with a line 12 parallel to the interface and the root end of the blade 6. Another line 13 indicates the centre line 13 of a blade 6 and yet another line 14 is indicating where the distance x is measured. Further, the distance L is the distance between the interface line 12 and where the line 14 is intersecting the line 13. The ratio x/L is used as geometrical expression for the pre-bend of the blades 6, and the start of the pre-bend is illustrated with a line 16, and in this embodiment approximately 1/2 of the blade is with a straight pre-bend.

The angle between the line 11 and horizontal is describing the tilt angle α. In this figure the tilt angle α is zero. Further the angle between the line 11 and the line 12 is describing the cone angle β.

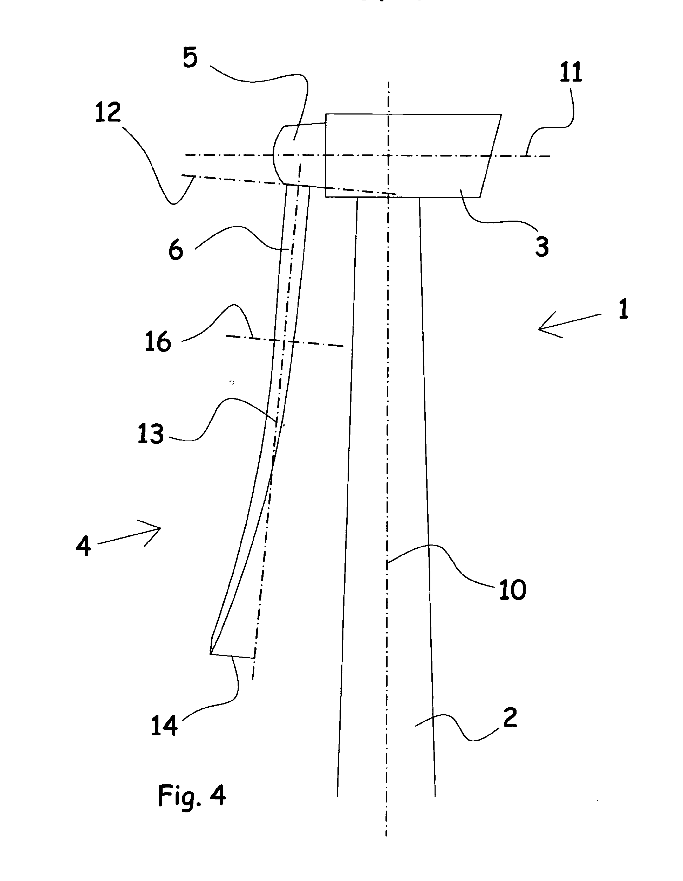

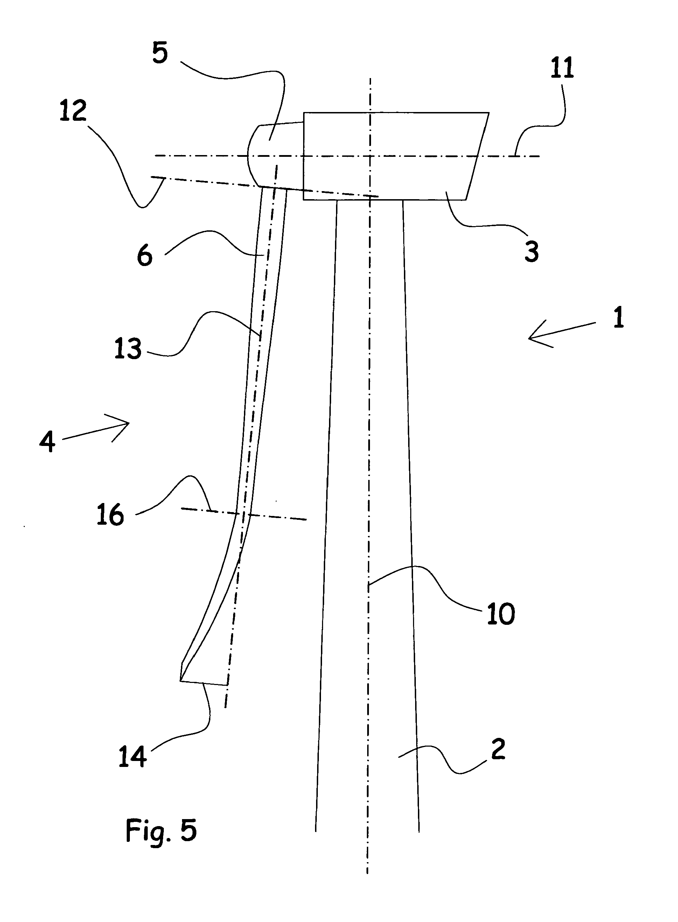

In fig 4 and 5 other ways of shaping the pre-bended blades 6 is shown. In fig. 4 the blade 6 has a straight portion from the hub 5 and approximately 1/3 of the length of the blade 6, where the outer 2/3 of the blade has a forward curved shape, illustrated with the line 16, resulting in the same ratio x/L as seen in fig 3. In fig. 5 the blade has a straight portion of approximately 2/3 of the length of the blade 6, and the outer 1/3 is with a curved shape, once again illustrated by the line 16 and still with the same ratio x/L as in fig. 3 and 4.

**Reference list:**

| | |
|---|---|
| 1 | wind turbine |
| 2 | tower |
| 3 | nacelle |
| 4 | rotor |
| 5 | hub |
| 6 | blade |
| 7 | area |
| 8 | chord |
| 9 | circumference |
| 10 | centre line |
| 11 | line |
| 12 | line |
| 13 | centre line |
| 14 | line |
| 15 | maximum radius |
| 16 | line |
| | |
| L | distance |

x/L    ratio
$\alpha$    tilt angle
$\beta$    cone angle

**Claims**

1. Rotor (4) for a wind turbine (1), where the wind turbine comprises at least a tower (2), a nacelle (3) on top of said tower and a rotor,

   ▪ said rotor (4) having a diameter of 50 metres or more,
   ▪ and being connectable to a substantially horizontal main shaft,
   ▪ said main shaft being rotatably mounted in said nacelle (3),
   ▪ said wind turbine (1) being of the type where the rotor (4) is facing upwind, where said rotor (4) comprises at least one blade (6), but preferably three blades and a hub (5),
   ▪ said blades (6) having an elongated shape with a root end and a tip end, where said blades (6) at the root end are connected to said hub (5) and where the interface between
   ▪ said hub (5) and said blades (6) comprises a pitch mechanism,
   ▪ further said rotor (4) has a rotor plane, described by the area swept by the blades (6), said rotor plane being with a cone shape, i.e. the rotor plane is with an angle towards the upwind direction, where the cone shape - at least partly - originates from the shape of the hub (5), and where one blade (6) of said rotor has a combined radius specific solidity $Sol_r$ at:
   ▪ blade radius r = 30% of the rotor radius R, where $Sol_r \leq 0,036$
   ▪ blade radius r = 40% of the rotor radius R, where $Sol_r \leq 0,03$
   ▪ blade radius r = 50% of the rotor radius R, where $Sol_r \leq 0,0245$
   ▪ blade radius r = 60% of the rotor radius R, where $Sol_r \leq 0,021$
   ▪ blade radius r = 70% of the rotor radius R, where $Sol_r \leq 0,0175$
   ▪ blade radius r = 80% of the rotor radius R, where $Sol_r \leq 0,014$
   ▪ blade radius r = 90% of the rotor radius R, where $Sol_r \leq 0,0115$
   ▪ blade radius r = 96% of the rotor radius R, where $Sol_r \leq 0,0095$,
   ▪ and where $Sol_r$ has a level below a linear interpolation between any of the given blade radii,
   **characterised in that**
   ▪ a blade (6) of said rotor (4) comprises at least two blade sections in the lengthwise direction of said blade (6),
   ▪ where at least one blade section has a curvature along the blade and relative to a second blade section,
   ▪ where said curvature results in the tip end of said blade being offset (x) relative to the axis of the blade root,
   ▪ where the ratio (x/L) of the offset (x) relative to a distance (L) from the tip end of the blade to the blade root, said distance (L) being measured perpendicular to the plane of the root end of the blade and said offset (x) being measured as the perpendicular offset from the axis of the blade root is between 0,022 and 0,087,
   ▪ and that said rotor (4) is with a cone angle ($\beta$) between 1 and 6 degrees, said cone angle ($\beta$) being measured between the axis of the blade root and perpendicular to the axis of the main shaft.

2. Rotor (4) for a wind turbine (1) according to claim 1, **characterised in that** a blade (6) of said rotor has a combined radius specific solidity $Sol_r$ at:

   ▪ blade radius r = 30% of the rotor radius R, where $Sol_r \leq 0,0345$
   ▪ blade radius r = 40% of the rotor radius R, where $Sol_r \leq 0,028$
   ▪ blade radius r = 50% of the rotor radius R, where $Sol_r \leq 0,023$
   ▪ blade radius r = 60% of the rotor radius R, where $Sol_r \leq 0,019$
   ▪ blade radius r = 70% of the rotor radius R, where $Sol_r \leq 0,016$
   ▪ blade radius r = 80% of the rotor radius R, where $Sol_r \leq 0,0125$
   ▪ blade radius r = 90% of the rotor radius R, where $Sol_r \leq 0,01$
   ▪ blade radius r = 96% of the rotor radius R, where $Sol_r \leq 0,008$,
   ▪ and where $Sol_r$ has a level below a linear interpolation between any of the given blade radii.

3. Rotor (4) for a wind turbine (1) according to any of the preceding claims, **characterised in that** a blade (6) of said rotor (4) has a combined radius specific solidity $Sol_r$ at:

   ▪ blade radius r = 30% of the rotor radius R, where $Sol_r \leq 0,033$
   ▪ blade radius r = 40% of the rotor radius R, where $Sol_r \leq 0,0255$
   ▪ blade radius r = 50% of the rotor radius R, where $Sol_r \leq 0,021$
   ▪ blade radius r = 60% of the rotor radius R, where $Sol_r \leq 0,017$
   ▪ blade radius r = 70% of the rotor radius R, where $Sol_r \leq 0,0135$

- blade radius r = 80% of the rotor radius R, where $Sol_r \leq 0{,}011$
- blade radius r = 90% of the rotor radius R, where $Sol_r \leq 0{,}008$
- blade radius r = 96% of the rotor radius R, where $Sol_r \leq 0{,}0065$,
- and where $Sol_r$ has a level below a linear interpolation between any of the given blade radii.

4. Rotor (4) for a wind turbine (1) according to any of the preceding claims, **characterised in that** the ratio (x/L) of the offset (x) relative to a distance (L) is between 0,033 and 0,054.

5. Rotor (4) for a wind turbine (1) according to any of the preceding claims, **characterised in that** said rotor (4) is with a cone angle ($\beta$) between 2 and 5 degrees, said cone angle ($\beta$) being measured between the axis of the blade root and perpendicular to the axis of the main shaft.

6. Rotor (4) for a wind turbine (1) according to any of the preceding claims, **characterised in that** said main shaft is with an angle between -2 and +4 degrees, said angle being measured at the hub and between horizontal and the centre line of said main shaft.

7. Rotor (4) for a wind turbine (1) according to any of the preceding claims, **characterised in that** said main shaft is with an angle between -2 and +2 degrees, said angle being measured at the hub (5) and between horizontal and the centre line of said main shaft.

8. Rotor (4) for a wind turbine (1) according to any of the preceding claims, **characterised in that** said main shaft is with an angle between 0 and +2 degrees, said angle being measured at the hub and between horizontal and the centre line of said main shaft.

9. Rotor (4) for a wind turbine (1) according to any of the preceding claims, **characterised in that** a blade (6) in said rotor (4) is assembled from two or more blade sections, and where the two or more sections comprises co acting means for assembling said blade sections into one functionally complete blade for a rotor.

**Patentansprüche**

1. Rotor (4) für eine Windturbine (1), wobei die Windturbine mindestens einen Turm (2), eine Gondel (3) auf dem Turm und einen Rotor umfasst, wobei

- der Rotor (4) einen Durchmesser von 50 Metern oder mehr hat,
- und verbindbar mit einer im Wesentlichen horizontalen Hauptwelle ist,
- und diese Hauptwelle drehbar gelagert auf der Gondel (3) ist,
- diese Windturbine (1) von dem Typ ist, bei der der Rotor (4) ein Luvläufer ist, wobei besagter Rotor (4) aus mindestens einem Blatt (6) besteht, vorteilhafterweise jedoch aus drei Blättern und einer Nabe (5),
- besagte Blätter (6) eine verlängerte Form mit einer Wurzel und einer Spitze haben, wobei die Blätter (6) an der Wurzel mit der Nabe (5) verbunden sind und wobei die Nahtstelle zwischen
- der Nabe (5) und den Blättern (6) einen Verstellmechanismus aufweist,
- wobei der Rotor (4) eine Rotorfläche aufweist, beschrieben durch die Fläche, die die Blätter (6) durchschwingen, diese Rotorfläche eine Kugelform aufweist, z.B. die Rotorfläche einen Winkel hat in Luvrichtung, wobei die Kugelform - zumindest teilweise - von der Form der Nabe (5) stammt, und wobei ein Blatt (6) dieses Rotors eine kombinierte radiusspezifische Festigkeit $Sol_r$ hat:
- Blattradius r = 30% des Rotorradius R, wobei $Sol_r \leq 0{,}036$
- Blattradius r = 40% des Rotorradius R, wobei $Sol_r \leq 0{,}03$
- Blattradius r = 50% des Rotorradius R, wobei $Sol_r \leq 0{,}0245$
- Blattradius r = 60% des Rotorradius R, wobei $Sol_r \leq 0{,}021$
- Blattradius r = 70% des Rotorradius R, wobei $Sol_r \leq 0{,}0175$
- Blattradius r = 80% des Rotorradius R, wobei $Sol_r \leq 0.014$
- Blattradius r = 90% des Rotorradius R, wobei $Sol_r \leq 0{,}0115$
- Blattradius r = 96% des Rotorradius R, wobei $Sol_r \leq 0{,}0095$,
- und wobei $Sol_r$ eine Höhe unterhalb der linearen Erweiterung zwischen einem der gegebenen Radien hat.

**dadurch gekennzeichnet, dass**
- ein Blatt (6) dieses Rotors (4) mindestens zwei Blattabschnitte in der Längsrichtung des Blattes (6) aufweist,
- wobei mindestens ein Blattabschnitt eine Krümmung entlang des Blattes und relativ zu einem zweiten Blattabschnitt aufweist,
- wobei diese Krümmung an der Spitze des Blattes entsteht und Abstand (x) relativ zur Blattwurzelachse,
- wobei das Verhältnis (x/L) des Abstandes (x) relativ zur Entfernung (L) von der Blattspitze zur Blattwurzel, diese Entfernung (L) gemessen wird im rechten Winkel zur Fläche des Wurzelendes des Blattes und dieser Abstand (x) gemessen wird wenn der senkrechte Abstand der Blattwurzelachse zwischen 0,022 und 0,087 ist.,

■ und der Rotor (4) mit einem Konuswinkel (β) zwischen 1 und 6 Grad, dieser Konuswinkel (β) zwischen der Achse der Blattwurzel und im rechten Winkel zu Achse der Hauptwelle gemessen wird.

2. Rotor (4) für eine Windturbine (1) nach Anspruch 1, **dadurch gekennzeichnet, dass** ein Blatt (6) dieses Rotors eine kombinierte radiusspezifische Festigkeit Sol$_r$ hat bei:

■ Blattradius r = 30% of the rotor radius R, wobei Sol$_r$ ≤ 0,0345
■ Blattradius r = 40% of the rotor radius R, wobei Sol$_r$ ≤ 0,028
■ Blattradius r = 50% of the rotor radius R, wobei Sol$_r$ ≤ 0,023
■ Blattradius r = 60% of the rotor radius R, wobei Sol$_r$ ≤ 0,019
■ Blattradius r = 70% of the rotor radius R, wobei Sol$_r$ ≤ 0,016
■ Blattradius r = 80% of the rotor radius R, wobei Sol$_r$ ≤ 0,0125
■ Blattradius r = 90% of the rotor radius R, wobei Sol$_r$ ≤ 0,01
■ Blattradius r = 96% of the rotor radius R, wobei Sol$_r$ ≤ 0,008,
■ und wobei Sol$_r$ eine Höhe unterhalb der linearen Erweiterung zwischen einem der gegebenen Radien hat.

3. Rotor (4) für eine Windturbine (1) nach einem oder mehreren der vorherigen Ansprüche, **dadurch gekennzeichnet, dass** ein Blatt (6) dieses Rotors (4) eine kombinierte radiusspezifische Festigkeit Sol$_r$ hat bei:

■ Blattradius r = 30% des Rotorradius R, wobei Sol$_r$ ≤ 0,033
■ Blattradius r = 40% des Rotorradius R, wobei Sol$_r$ ≤ 0,0255
■ Blattradius r = 50% des Rotorradius R, wobei Sol$_r$ ≤ 0,021
■ Blattradius r = 60% des Rotorradius R, wobei Sol$_r$ ≤ 0,017
■ Blattradius r = 70% des Rotorradius R, wobei Sol$_r$ ≤ 0,0135
■ Blattradius r = 80% des Rotorradius R, wobei Sol$_r$ ≤ 0,011
■ Blattradius r = 90% des Rotorradius R, wobei Sol$_r$ ≤ 0,008
■ Blattradius r = 96% des Rotorradius R, wobei Sol$_r$ ≤ 0,0065,
■ and wobei Sol$_r$ eine Höhe unterhalb der linearen Erweiterung zwischen einem der gegebenen Radien hat.

4. Rotor (4) für eine Windturbine (1) nach einem oder mehreren der vorherigen Ansprüche, **dadurch gekennzeichnet, dass** das Verhältnis (x/L) des Abstandes (x) relativ zur Entfernung (L) zwischen 0,033 und 0,054 ist.

5. Rotor (4) für eine Windturbine (1) nach einem oder mehreren der vorherigen Ansprüche, **dadurch gekennzeichnet, dass** der Rotor (4) einen Konuswinkel (β) zwischen 2 und 5 Grad hat, dieser Konuswinkel (β) zwischen der Achse der Blattwurzei gemessen wird und im rechten Winkel zur Achse der Hauptwelle.

6. Rotor (4) für eine Windturbine (1) nach einem oder mehreren der vorherigen Ansprüche, **dadurch gekennzeichnet, dass** die Hauptwelle einen Winkel von -2 und +4 Grad aufweist, dieser Winkel an der Nabe gemessen wird und zwischen horizontaler und Mittelachse der Hauptwelle.

7. Rotor (4) für eine Windturbine (1) nach einem oder mehreren der vorherigen Ansprüche, **dadurch gekennzeichnet, dass** die Hauptwelle einen Winkel zwischen -2 und +2 Grad aufweist, dieser Winkel an der Nabe (5) gemessen wird und zwischen horizontaler und Mittelachse der Hauptwelle.

8. Rotor (4) für eine Windturbine (1) nach einem oder mehreren der vorherigen Ansprüche, **dadurch gekennzeichnet, dass** die Hauptwelle einen Winkel zwischen 0 und +2 Grad aufweist, dieser Winkel an der Nabe gemessen wird und zwischen horizontaler und Mittelachse der Hauptwelle.

9. Rotor (4) für eine Windturbine (1) nach einem oder mehreren der vorherigen Ansprüche, **dadurch gekennzeichnet, dass** ein Blatt (6) am Rotor (4) montiert ist von zwei oder mehr Blattabschnitten, und wobei zwei oder mehr Abschnitte Mittel aufweisen, um die Blattabschnitte zu einem funktionierenden vollständigen Blatt für einen Rotor zu montieren.

## Revendications

1. Un rotor (4) pour une éolienne (1), qui comprend au moins une tour (2), une nacelle (3) au-dessus de la dite tour et un rotor,

■ Le rotor (4) ayant un diamètre de 50 mètres ou plus,
■ et pouvant se connecter à un arbre principal d'entraînement relativement horizontal
■ Le dit arbre principal étant monté de manière à pouvoir tourner dans la dite nacelle (3),

▪ La dite éolienne (1) étant d'un type dont le rotor (4) fait face au vent, dans lequel le dit rotor (4) comprend au moins une pale (6), mais de préférence trois pales et un moyeu (5),

▪ Les dites pales (6) ayant une forme allongée avec une base et une pointe, où les dites pales (6) sont reliés au dit moyeu (5) par leur base et où l'interface entre

▪ le dit moyeu (5) et les dites pales (6) comprend un system de pas,

▪ de plus, le dit rotor (4) a un plan du rotor, décrit par la surface balayée par les pales (6), ayant une forme de cône, à savoir que le plan du rotor a un angle vers la direction en amont, où la forme de cône - au moins partiellement - provient de la forme du moyeu (5), et où une pale (6) du dit rotor présente une solidité spécifique de rayon Sol$_r$ combiné à :

▪ rayon de pale r = 30% du rayon de rotor R, où Solr ≤ 0,036

▪ rayon de pale r = 40% du rayon de rotor R, où Solr ≤ 0,03

▪ rayon de pale r = 50% du rayon de rotor R, où Solr ≤ 0,0245

▪ rayon de pale r = 60% du rayon de rotor R, où Solr ≤ 0,021

▪ rayon de pale r = 70% du rayon de rotor R, où Solr ≤ 0,0175

▪ rayon de pale r = 80% du rayon de rotor R, où Solr ≤ 0,014

▪ rayon de pale r = 90% du rayon de rotor R, où Solr ≤ 0,0115

▪ rayon de pale r = 96% du rayon de rotor R, où Solr ≤ 0,0095,

Et où Sol$_r$ a un niveau inférieur à une interpolation linéaire entre chacun des rayons de la pale donnée,

**Caractérisé en ce que**

Une lame (6) du dit rotor (4) comprend au moins deux sections de pale dans le sens longitudinale de la dite lame (6),

Où au moins une section de pale a une courbure le long de cette pale et qu'elle est relative à une seconde partie de pale,

Où la dite courbure entraîne à la pointe de la pale un offset (x) par rapport à l'axe du plan de la base de la pale.

Où le rapport (x / L) de l'écart (x) par rapport à une distance (L) de l'extrémité de la pale jusqu'à la base, la dite distance (L) étant mesurée perpendiculairement au plan de la fin de la base de la pale et le dit décalage (x) étant mesuré comme le décalage perpendiculaire à l'axe de la base de la pale, est entre 0,022 et 0,087,

Et que le dit rotor (4) est avec un angle de cône (β) entre 1 et 6 degrés, le dit angle de cône (β) étant mesuré entre l'axe de la base de la pale et la perpendiculaire à l'axe de l'arbre principal.

2. Un rotor (4) pour une éolienne (1) selon la revendication 1, **caractérisé en ce qu'**une pale (6) du dit rotor présente une solidité spécifique Soir de rayon combiné à :

▪ rayon de pale r = 30% du rayon de rotor R, où Solr ≤ 0,0345

▪ rayon de pale r = 40% du rayon de rotor R, où Solr ≤ 0,028

▪ rayon de pale r = 50% du rayon de rotor R, où Solr ≤ 0,023

▪ rayon de pale r = 60% du rayon de rotor R, où Solr ≤ 0,019

▪ rayon de pale r = 70% du rayon de rotor R, où Solr ≤ 0,016

▪ rayon de pale r = 80% du rayon de rotor R, où Solr ≤ 0,0125

▪ rayon de pale r = 90% du rayon de rotor R, où Solr ≤ 0,01

▪ rayon de pale r = 96% du rayon de rotor R, où Solr ≤ 0,008,

Et où Sol$_r$ a un niveau inférieur à une interpolation linéaire entre chacun des rayons de pale donnés,

3. Un rotor (4) pour une éolienne (1) selon chacune des revendications précédentes, **caractérisé en ce qu'**une pale (6) du dit rotor (4) présente une solidité spécifique de rayon Solr combiné à :

▪ rayon de pale r = 30% du rayon de rotor R, où Solr ≤ 0,033

▪ rayon de pale r = 40% du rayon de rotor R, où Solr ≤ 0,0255

▪ rayon de pale r = 50% du rayon de rotor R, où Solr ≤ 0,021

▪ rayon de pale r = 60% du rayon de rotor R, où Solr ≤ 0,017

▪ rayon de pale r = 70% du rayon de rotor R, où Solr ≤ 0,0135

▪ rayon de pale r = 80% du rayon de rotor R, où Solr ≤ 0,011

▪ rayon de pale r = 90% du rayon de rotor R, où Solr ≤ 0,008 ▪ rayon de pale r = 96% du rayon de rotor R, où Solr ≤ 0,0065,

Et où Solr a un niveau inférieur à une interpolation linéaire entre chacun des rayons de pale donnée.

4. Un rotor (4) pour une éolienne (1) selon chacune des revendications précédentes, **caractérisé en ce que** le ratio (x / L) de l'écart (x) relatif à la distance (L) est compris entre 00,33 et 00,54.

5. Un rotor (4) pour une éolienne (1) selon chacune des revendications précédentes, **caractérisé en ce**

**que** le dit rotor (4) est à un angle de cône (β) entre 2 et 5 degrés, le dit angle de cône (β) étant mesuré entre l'axe de la base de pale et perpendiculaire à l'axe de l'arbre principal.

6. Un rotor (4) pour une éolienne (1) selon chacune des revendications précédentes, **caractérisé en ce que** le dit arbre de transmission principal est à un angle compris entre -2 et +4 degrés, le dit angle étant mesuré au niveau du moyeu et entre l'horizontale et l'axe central du dit arbre de transmission principal.

7. Un rotor (4) pour une éolienne (1) selon chacune des revendications précédentes, **caractérisé en ce que** le dit arbre principal est à un angle compris entre -2 et +2 degrés, le dit angle étant mesuré au niveau du moyeu (5) et entre l'horizontal et l'axe du dit arbre de transmission principal.

8. Un rotor (4) pour une éolienne (1) selon chacune des revendications précédentes, **caractérisé en ce que** le dit arbre principal est à un angle compris entre 0 et +2 degrés, le dit angle étant mesuré au niveau du moyeu (5) et entre l'horizontal et l'axe du dit arbre de transmission principal.

9. Un rotor (4) pour une éolienne (1) selon chacune des revendications précédentes, **caractérisé en ce qu'**une pale (6) dans le dit rotor (4) est assemblé à partir de deux ou plusieurs sections de pale, et où les deux ou plus de sections comprennent des moyens d'interagir pour assembler les dites sections de pale en une pale complètement fonctionnelle pour un rotor.

Fig. 1

Fig. 2

Fig. 3

Fig. 4

Fig. 5

**EP 2 564 057 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1019631 B1
- EP 1596063 A2
- WO 2006090215 A